Europäisches Patentamt

European Patent Office

Office européen des brevets

(19)

(11) Publication number: **0 116 194**
**B1**

(12) **EUROPEAN PATENT SPECIFICATION**

(45) Date of publication of patent specification: 16.09.87

(51) Int. Cl.⁴: **C 04 B 35/02**

(21) Application number: 83300694.3

(22) Date of filing: 11.02.83

(54) A carbon-containing refractory.

(43) Date of publication of application:
22.08.84 Bulletin 84/34

(45) Publication of the grant of the patent:
16.09.87 Bulletin 87/38

(84) Designated Contracting States:
AT BE DE FR GB IT LU NL SE

(56) References cited:
GB-A-2 040 911

CHEMICAL ABSTRACTS, vol. 97, no. 6, August 1982, page 255, no. 43059w, Columbus, Ohio, USA

CHEMICAL ABSTRACTS, vol. 94, no. 18, May 1981, page 298, no. 144266e, Columbus, Ohio, USA

CHEMICAL ABSTRACTS, vol. 98, no. 22, May 1983, page 303, no. 184488t, Columbus, Ohio, USA

The file contains technical information submitted after the application was filed and not included in this specification

(73) Proprietor: SHINAGAWA REFRACTORIES CO., LTD.
2-1, Ohtemachi 2-chome Chiyoda-ku
Tokyo 100 (JP)

(72) Inventor: Yoshino, Shigeo
1940, Inbe
City of Bijen Okayama Prefecture (JP)
Inventor: Nishio, Hideaki
314-8, Akoda
City of Okayama Okayama Prefecture (JP)
Inventor: Uchida, Issei
1931, Inbe
City of Bijen Okayama Prefecture (JP)

(74) Representative: Godwin, Edgar James et al
MARKS & CLERK 57-60 Lincoln's Inn Fields
London, WC2A 3LS (GB)

(56) References cited:
CHEMICAL ABSTRACTS, vol. 92, no. 24, June 1980, page 261, no. 202502a, Columbus, Ohio, USA

Courier Press, Leamington Spa, England.

## Description

The present invention relates to an improved type of carbon-containing refractory and more specifically, but not solely, to burned and unburned $Al_2O_3$—C, MgO—C, and MgO—$Al_2O_3$—C refractories having improved resistance to oxidation, spalling, and corrosion, in addition to improved hot strength.

Refractories containing carbon in the form of graphite are widely used in metallurgy. When in contact with molten iron, molten steel, or slag, these refractories exhibit excellent resistance to corrosion. Since graphite itself is resistant to wetting by slag, its presence in refractories prevents the penetration of slag into the refractories. Further, because of the presence of graphite, the refractories cannot be over-sintered, and therefore thermal spalling does not readily occur. This, too, contributes to the high refractoriness of graphite-containing refractories.

However, graphite is very easily oxidized by oxygen in the surroundings, which causes a graphite-containing refractory to lose its excellent characteristics. In order to obtain a refractory with good characteristics, it is extremely important to decrease the oxidation to graphite. Various methods have been proposed to increasing the oxidation resistance of this type of refractory, but at present no satisfactory method has been found.

Japanese Patent Laid Open No. 50-69106 discloses covering the surface of a carbon-containing moulded refractory material with a nitride or carbide of silicon and further coating it with a borosilicate glass comprising boron carbide and silicon dioxide in order to prevent oxidation. However, these covering layers are not resistant to attack by molten iron, molten steel, or slag, and if worn through by chemical attack will lose their anti-oxidizing effect. Accordingly, this method is not desirable.

Another method of preventing oxidation in carbon-containing refractories is to uniformly disperse metal powder in a carbon-containing moulded refractory material. Japanese Patent Laid Open No. 55-107749 discloses adding magnesium powder, aluminium powder, and silicon powder to carbon-containing refractory bricks, and Japanese Patent Laid Open No. 54-39422 discloses adding to carbon-containing refractories a metal powder having a greater affinity for oxygen than carbon. In the latter disclosure, at least one type of metal powder selected from Al, Si, Cr, Ti, and Mg is added. However, the resistance to oxidation and the hot strength of the resulting carbon-containing refractory are not fully satisfactory.

It is the object of the present invention to overcome the drawbacks of carbon-containing refractories of the prior art and provide a carbon-containing refractory with excellent resistance to oxidation and hot strength. These properties are obtained by the addition of boron carbide and metal powders to the refractory, the metal powder comprising Al and Si in combination. In the present context silicon is taken to be a metal. We have found that a lower weight loss after oxidizing burning can be achieved by the combined use of Al and Si with the use of a relatively small amount of boron carbide.

The carbon-containing refractory of the present invention comprises 3 to 30 parts by weight of graphite and 70 to 97 parts by weight of refractory raw materials, the total being 100 parts by weight; 1 to 7 parts by weight of metal powder, the metal powder comprising aluminium and silicon in combination; and 2 to 5 parts by weight of boron carbide.

It is not fully clear what is the bonding structure of the resulting refractory. However, it is thought that when the fine grains of the refractory raw material, the fine grains of graphite, the metallic powder, and the boron carbide are heated, the product of the reaction between the metallic powder and the boron carbide binds together the matrix part of brick which is constituted from fine grains of graphite and refractory raw materials. Further, it is thought that only a portion of the surface of the boron carbide powder is converted to boron oxide by oxygen contained in the pores of the refractory, promoting the sintering of the refractory and forming a compact, dense, and strong bonding structure. Aluminium metal has the potential drawback that it forms aluminium carbide ($Al_4C_3$) in the temperature range of 800—1400°C. Aluminium carbide is undesirable because it is decomposed by water or by moisture in the air, causing the refractory to become brittle. However, after the refractory of the present invention was kept in a reducing atmosphere at 1500°C for 3 hours, aluminium carbide was not identified by X-ray analysis. The combined presence in the refractory of boron carbide with aluminium powder effectively prevents the formation of aluminium carbide. When only boron carbide was added to the refractory raw materials and graphite, without any metal powder, the hot strength and the strength after heating were low. Therefore, in the present invention, the metal powder and boron carbide are indispensable components.

When the surface of the refractory is exposed to molten metal, boron carbide is oxidized to form oxide. Boron oxide together with oxides of the metal powder and the refractory raw material forms a melt of high viscosity which covers the surface of the refractory and prevents oxidation of the graphite.

The refractory raw materials which may be employed in the present invention comprise oxides such as magnesia, spinel, alumina, silica, zircon, and zirconia, and non-oxides such as silicon carbide, silicon nitride, and boron nitride. There are no particular limits on the components, but it is desirable that the main components be magnesia, spinel, and alumina. The graphite may be a natural graphite such as amorphous graphite or crystalline graphite, or it may be an artificial graphite such as that derived from electrode scraps, oil coke, or carbon black. However, it is preferable to use crystalline graphite with few impurities. The relative proportion of graphite used depends upon the type of refractory raw materials used and the intended use for the refractory. However, it is generally preferable to employ 3—30 parts by weight of graphite per 100 parts by weight of the refractory aggregate consisting of graphite and refractory raw materials. If the amount of graphite in the aggregate is less than 3 parts by weight, the graphite will not exhibit good resistance to wetting by slag, in which case the entire refractory will have poor resistance to slag. Further, if the graphite exceeds 30 parts by weight, the desired strength can not be obtained and it becomes difficult to obtain a compact structure constitution.

Commercial boron carbide abrasive material is satisfactory for use as the boron carbide in the refractory. In order to achieve good reactivity and uniform dispersion of the boron carbide, it is desirable that the grain size be at most 0.125 mm. Per 100 parts by weight of refractory aggregate, 2 to 5 parts by weight of boron carbide should be used. If it exceeds 5 parts by weight, the refractory exhibits resistance to oxidation, but its hot strength and durability decrease. As for the metal powder, it comprises Al and Si in combination. Per 100 parts by weight of refractory aggregate, the amount of metal powder should be 1 to 7 parts by weight. If less than 1 part by weight is used, the addition of the metal powder produces no effect, and if more than 7 parts by weight are used, the resistance to corrosion of the refractory decreases.

The grain-size-regulated refractory aggregate, boron carbide, and metal powder are blended in the above described ratios.

A binder such as tar, pitch, phenolic resin, or furan resin is added. Using conventional methods, this mixture is moulded. After being dried at around 200°C, an unburned refractory is obtained. If it is instead burned at 900—1500°C in a reducing atmosphere, a burned refractory is obtained.

Example

60 parts by weight of magnesia, 30 parts by weight of spinel, 10 parts by weight of graphite, 3 parts by weight of aluminium powder, 3 parts by weight of silicon powder, 2 parts by weight of boron carbide, and 5 parts by weight of resol-type phenolic resin as a binder were blended together and then moulded under a pressure of 1000 kg/cm$^2$ (98.1 MPa) into standard bricks (230×114×65 mm) which were then dried at 200°C for 5 hours.

At 1400°C, the completed unburned bricks had a high hot modulus of rupture of 168 kg/cm$^2$ (16.5 MPa). After oxidizing burning at 1000°C for 3 hours, the bricks had a decrease in weight of only 1.5%.

Comparative Examples 1—4

For the purpose of comparison, four refractories having the compositions shown on the right-hand side of Table 1 were blended and moulded into standard bricks using the same method as was used in the above Example.

Unlike the refractory of the present invention, the refractories of Comparative Examples 2 to 4 did not contain boron carbide and metal powder in combination. As can be seen from the table, these refractories had a much lower hot modulus of rupture and a much greater weight loss during burning at 1000°C than does the present refractory, clearly illustrating the beneficial effect of the combination of boron carbide and metal powder.

The refractory of Comparative Example 1 had a boron carbide content of only 1 part by weight (i.e. below the lower limit of the present invention) and exhibited a higher weight loss.

TABLE 1

| | Example | Comparative Ex. | | | |
|---|---|---|---|---|---|
| | | 1 | 2 | 3 | 4 |
| Magnesia | 60 | 80 | 80 | 80 | 80 |
| Spinel | 30 | | | | |
| | | | | | |
| | | | | | |
| Graphite | 10 | 20 | 20 | 20 | 20 |
| Metal Al | 3 | 3 | | | 3 |
| Si | 3 | 1 | | | |
| Boron carbide | 2 | 1 | | 0.5 | |
| *) % weight loss after oxidation burning at 1000°C for 3 hours | 1.5 | 3.1 | 12.0 | 7.1 | 9.3 |
| Hot modulus of rupture (kg/cm$^2$**), at 1400°C) | 168 | 210 | 42 | 146 | 120 |

*) This value is the total % weight loss after 1000°C burning minus the % weight loss due to vaporization of the binder.
**) 1 kg/cm$^2$=0.0987 MPa.

## Claim

A carbon-containing refractory comprising: 3 to 30 parts by weight of graphite and 70 to 97 parts by weight of refractory raw materials, the total being 100 parts by weight; 1 to 7 parts by weight of a metal powder, the said powder comprising aluminium and silicon in combination; and 2 to 5 parts by weight of boron carbide.

## Patentanspruch

Ein kohlenstoffhältiges Feuerfestmaterial, welches in insgesamt 100 Gewichtsteilen 3 bis 30 Gewichtsteile Graphit und 70 bis 97 Gewichtsteile feuerfeste Ausgangsstoffe enthält; sowie weiters 1 bis 7 Gewichtsteile eines Metallpulvers, welches eine Zusammensetzung aus Aluminium und Silizium enthält; und 2 bis 5 Gewichtsteile Borcarbid enthalten sind.

## Revendication

Matériau réfractaire contenant du carbone comprenant: 3 à 30 parties en poids de graphite et 70 à 97 parties en poids de matières premières réfractaires, le total étant de 100 parties en poids; 1 à 7 parties en poids d'une poudre de métal, ladite poudre comprenant de l'aluminium et du silicium en combinaison; et 2 à 5 parties en poids de carbure de bore.